(19) Europäisches Patentamt
European Patent Office
Office européen des brevets

(11) **EP 4 184 391 B1**

(12) **EUROPEAN PATENT SPECIFICATION**

(45) Date of publication and mention
of the grant of the patent:
**17.06.2026 Bulletin 2026/25**

(21) Application number: **21306611.1**

(22) Date of filing: **19.11.2021**

(51) International Patent Classification (IPC):
*G06N 3/049* (2023.01)    *G06N 7/01* (2023.01)
*G06N 3/084* (2023.01)    *G06N 3/047* (2023.01)
*G06N 3/063* (2023.01)    *G06N 3/044* (2023.01)
*G06N 3/048* (2023.01)

(52) Cooperative Patent Classification (CPC):
**G06N 3/084; G06N 3/047; G06N 3/049; G06N 7/01;**
G06N 3/044; G06N 3/048; G06N 3/063

(54) **NEURAL NETWORK AND METHOD FOR VARIATIONAL INFERENCE**

NEURONALES NETZWERK UND VERFAHREN ZUR VARIATIONSINFERENZ

RÉSEAU NEURONAL ET PROCÉDÉ D'INFÉRENCE VARIATIONNELLE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(43) Date of publication of application:
**24.05.2023 Bulletin 2023/21**

(73) Proprietor: **Commissariat à l'Energie Atomique et
aux Energies
Alternatives
75015 Paris (FR)**

(72) Inventor: **DALGATY, Thomas
91191 GIF-SUR-YVETTE CEDEX (FR)**

(74) Representative: **Cabinet Beaumont
4, Place Robert Schuman
B.P. 1529
38025 Grenoble Cedex 1 (FR)**

(56) References cited:
  • **BLEEMA ROSENFELD ET AL: "Spiking
Generative Adversarial Networks With a Neural
Network Discriminator: Local Training, Bayesian
Models, and Continual Meta-Learning",
ARXIV.ORG, CORNELL UNIVERSITY LIBRARY,
201 OLIN LIBRARY CORNELL UNIVERSITY
ITHACA, NY 14853, 2 November 2021
(2021-11-02), XP091095072**

  • **EMRE NEFTCI ET AL: "Event-driven contrastive
divergence for spiking neuromorphic systems",
FRONTIERS IN NEUROSCIENCE, vol. 7, no. 272,
30 January 2014 (2014-01-30), XP055218818,
DOI: 10.3389/fnins.2013.00272**
  • **HYERYUNG JANG ET AL: "BiSNN: Training
Spiking Neural Networks with Binary Weights via
Bayesian Learning", ARXIV.ORG, CORNELL
UNIVERSITY LIBRARY, 201 OLIN LIBRARY
CORNELL UNIVERSITY ITHACA, NY 14853, 15
December 2020 (2020-12-15), XP081838811**
  • **GUO SHANGQI ET AL: "Hierarchical Bayesian
Inference and Learning in Spiking Neural
Networks", IEEE TRANSACTIONS ON
CYBERNETICS, IEEE, PISCATAWAY, NJ, USA,
vol. 49, no. 1, 1 January 2019 (2019-01-01), pages
133 - 145, XP011700733, ISSN: 2168-2267,
[retrieved on 20181213], DOI: 10.1109/
TCYB.2017.2768554**

EP 4 184 391 B1

**Description**

Technical field

The present disclosure relates generally to the field of artificial neural networks, and in particular to devices and methods for implementing Bayesian neural networks.

Background art

Artificial neural networks (ANN) are computing architectures that are developed to mimic, to a certain extent, neuro-biological systems. Such neural networks generally comprise a network of artificial neurons, which receive inputs, combine these inputs with their internal state, and often apply a function to it, in order to produce an output signal. Outputs of neurons are coupled to the inputs of other neurons by connections, which are referred to as synapses, their equivalent in the biological brain.

The synapses generally perform some processing of the signals conveyed between the neurons. For example, each synapse stores a gain factor, or weight, which is applied to the signal from the pre-synaptic neuron in order to increase or decrease its strength, before it is conveyed to one or more post-synaptic neurons. The synapses between each layer of neurons of the ANN are generally implemented by a matrix multiplication or dot/inner product calculation.

It is possible to categorize neural networks into two families: deterministic neural networks, which provide a deterministic output for a given input; and Bayesian, or probabilistic neural networks, which are based on Bayesian deep learning models, and which encode synaptic parameters using distributions of probability.

Bayesian deep learning models are of great interest because, since they describe parameters using probability distributions, the probability distributions of their outputs can be used to describe uncertainty in predictions. Uncertainty can be particularly useful in safety-critical applications, such as autonomous driving, where potentially dangerous actions, based on neural network outputs, should only be taken by a system if these outputs are highly certain. The uncertainty described by Bayesian synapses propagates through to the outputs of the model, thereby offering a means of characterizing the uncertainty in predictions generated by the model.

The publication by Neal, Radford M. entitled "Bayesian learning for neural networks". Vol. 118. Springer Science & Business Media, 2012, describes a Bayesian machine learning scheme based on Markov chain Monte Carlo sampling, which is used to derive the probability distributions for encoding the synaptic weights of the network. However, a drawback of the Markov chain Monte Carlo sampling approach is that the algorithm does not scale well to the large models that are used in the context of deep learning, where there can be millions or hundreds of millions of parameters.

The publication by Blundell, Charles, et al. entitled "Weight uncertainty in neural network" International Conference on Machine Learning. PMLR, 2015, describes an approach based on variational inference, which provides a more promising solution for large models.

However, a technical challenge is that to generate a series of uniform random numbers and perform an operation for each synapse, for each timestep (if the model is recurrent), and for each forward propagation, is computationally demanding. The problems are accentuated with larger models, due to the delay and cost of computing resources. There is thus a need to reduce the cost of random number generation in Bayesian neural networks, particularly those based on variational inference.

The publication by BLEEMA ROSENFELD ET AL. entitled "Spiking Generative Adversarial Networks With a Neural Network Discriminator: Local Training, Bayesian Models, and Continual Meta-Learning", ARXIV.ORG, CORNELL UNIVERSITY LIBRARY, 201 OLIN LIBRARY CORNELL UNIVERSITY ITHACA, NY 14853, 2 November 2021, relates to local training, Bayesian models, and continual meta-learning in relation with spiking generative adversarial networks with a neural network discriminator.

Summary of Invention

Embodiments of the present disclosure aim to address one or more drawbacks in the prior art.

The invention is defined by the appended set of claims.

Brief description of drawings

The foregoing features and advantages, as well as others, will be described in detail in the following description of specific embodiments given by way of illustration and not limitation with reference to the accompanying drawings, in which:

Figure 1 schematically illustrates a Bayesian neural network according to an example embodiment;

Figure 2 schematically illustrates a cross-point memory array implementing a synaptic weight matrix between layers of a neural network according to an example embodiment;

Figure 3 is a circuit diagram of a linear feedback shift register for performing random number generation according to an example embodiment;

Figure 4 schematically illustrates a computing device implementing a neural network according to an example embodiment of the present disclosure;

Figure 5A is a graph representing a voltage spike generated by a spiking neuron according to an example embodiment;

Figure 5B is a graph illustrating an example of an activation function of a spiking neuron and of a surrogate gradient used during backward propagation;

Figure 6 is a flow diagram illustrating operations in a method of forward propagation in a Bayesian neural network according to an example embodiment of the present disclosure;

Figure 7 is a flow diagram illustrating operations in a method of training a Bayesian neural network according to an example embodiment of the present disclosure;

Figure 8 is a flow diagram illustrating operations in a method of inference using a Bayesian neural network according to an example embodiment of the present disclosure;

Figure 9 is a graph illustrating an example of an electrocardiogram dataset;

Figure 10 schematically illustrates a recurrent layer of a spiking neural network with all-to-all connectivity according to an example embodiment of the present disclosure;

Figure 11 is a graph representing negative log likelihood;

Figure 12 shows raster plots of time stamps of spikes emitted by a neuron of a reservoir layer and of an output layer;

Figure 13 is a plot of certainty of all predictions made on a dataset; and

Figure 14 schematically illustrates a hardware system according to an example embodiment of the present disclosure.

Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

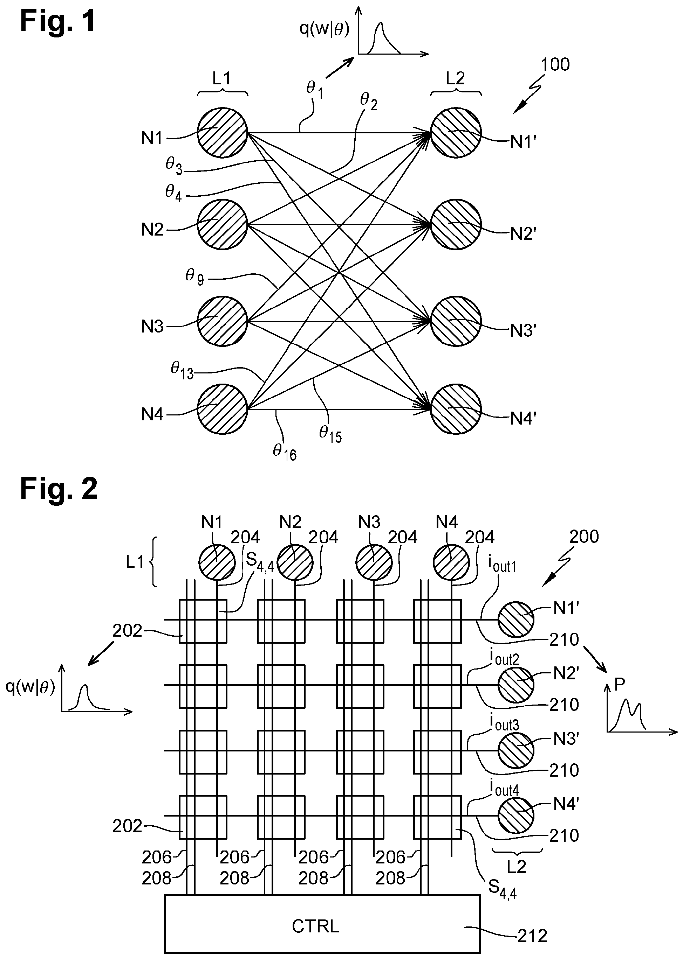

Figure 1 schematically illustrates a Bayesian neural network 100 according to an example embodiment. The network 100 comprises, in the example of Figure 1, a layer L1 of pre-synaptic neurons N1 to N4, also referred to as pre-synaptic neurons, and a layer L2 of post-synaptic neurons N1' to N4', also referred to herein as post-synaptic neurons. The outputs of each of the pre-synaptic neurons N1 to N4 is for example coupled to an input of each of the post-synaptic neurons N1' to N4'. In some cases, the layer L1 may be the input layer of the network, and/or the layer L2 may be the output layer of the network. Furthermore, the network 100 may be part of a larger network, and in particular, there may be additional layers before the layer L1 and/or after the layer L2, which may or may not be of Bayesian type.

The pre-synaptic neurons N1 to N4 are coupled to the post-synaptic neuros N1' to N4' via K synapses associated with a set of parameters $\theta$. Each parameter $\theta_k$ of the set represents a weight, which in the case of a Bayesian neural network is not a fixed value, but rather a probability distribution associated with the synapse. An example of the distribution $q(w|\theta)$ of $\theta_1$ as represented by a graph shown as an inset in Figure 1. Upon each forward propagation through the network, a value of each of the parameters $\theta_k$ is for example sampled based on one or more probability distribution parameters that represent the probability distribution of the parameter $\theta_k$. In some embodiments, the probability distribution of each parameter $\theta_k$ is a Gaussian distribution, and the probability distribution parameters are the mean $\mu_k$ and standard deviation $\sigma_k$ of the probability distribution. In alternative embodiments, a single probability distribution parameter could be used to represent the probability distribution of each parameter $\theta_k$. For example, the probability distribution of each parameter $\theta_k$ is the Bernoulli distribution, wherein a single parameter gives the probability that the synapse weight is 1.

Of course, while Figure 1 illustrates an example of two layers of a network, each layer comprising four neurons, there could be any number of layers, each with any number of neurons. Furthermore, while in the example of Figure 1 the layers L1 and L2 are fully connected, in alternative embodiments the layers could be only partially connected.

Figure 2 schematically illustrates a cross-point memory array 200 implementing a synaptic weight probability distribution matrix between the layers L1 and L2 of the neural network of Figure 1. Each synapse $S_{i,j}$ between pre-synaptic neuron i and post-synaptic neuron j is implemented by a corresponding synapse circuit 202. There are thus 16 synapse circuits 202 in the example of Figure 2, one coupling each of the four pre-synaptic neurons N1 to N4 to each of the four post-synaptic neurons N1' to N4'. The synapse circuits 202 are for example arranged in columns and rows. Each synapse circuit 202 is for example configured to store, and sample, a probability distribution $q(w|\theta)$, as represented by a graph shown as an inset in Figure 2. The synapse circuits 202 of a same column are for example coupled to a common neuron output line 204 of each column, this line 204 for example being an output line of the pre-synaptic neuron of the synapse circuits 202 of the column. Furthermore, the synapse circuits 202 of a same column are for example coupled to common control lines 206, 208 of each column. The synapse circuits 202 of a same row are for example coupled to a common neuron input line 210 of each row, this line 210 for example being coupled to an input of the post-synaptic neuron of the synapse circuits 202 of the row. For example, each synapse circuit 202 of each row generates an output current on the corresponding common neuron input line 210, and the sum of these currents provides an input current $i_{outj}$ to the corresponding post-synaptic neuron Nj'. As represented by another graph inset in Figure 2, the resulting probability distribution P present on the common row lines is the sum of the probability distributions of each synapse circuit 202 of the row. The control lines 206, 208 are for example controlled by a control circuit (CTRL) 212.

During training of the Bayesian neural network 100, the synaptic probability distributions are learned progressively by passing batches of samples through the network to generate outputs, and then performing back propagation in order to adjust the probability distributions of each synapse. Each forward pass for example involves sampling from probability distributions the weight values applied by the synapses, which are used to calculate the model outputs.

Once trained, inference is for example performed using the network. Multiple forward passes are performed with different samples from these distributions, referred to as Monte Carlo inference, or Monte Carlo integration, allowing a distribution of predictions to be built up at each output neuron. For example, the Monte Carlo integration involves M iterations i, where M is for example equal to at least 2, and in practice may be equal to several tens, hundreds or even several thousands. Properties of these distributions can be used to describe prediction uncertainty: for example, the standard deviation of the neuron with the largest mean value, or the entropy of the sum of the categorical prediction distributions over all Monte Carlo integrations.

One popular means of learning the synaptic distributions in deep Bayesian learning are variational inference algorithms, as described for example in more detail in the publication by Blundell, Charles et al. entitled "Weight uncertainty in neural network", International Conference on Machine Learning, PMLR, 2015. Variational inference is a means of approximating Bayes rule (Equ. 1):

[Math 1]

$$P(w|D) = \frac{p(D|w)p(w)}{p(D)}$$

where w is a model and D is some data.

Bayes rule provides a mechanism to determine the parameters of the model w, given the data D, this result otherwise being called the posterior distribution $P(w|D)$. This is achieved based on the likelihood of the data given the model $P(w|D)$, on a prior belief on that model p(w), and on an evidence term p(D).

However, Bayes rule is intractable for Bayesian neural networks owing to the complexity of evaluating the evidence term. Variational inference proposes instead to reformulate the learning problem as minimising the difference between the true posterior $P(w|D)$ and an approximating distribution $q(w|\theta)$, often referred to as the variational distribution. For example, this is achieved by minimising the Kullback-Leibler divergence (KLD) between the two. The following equations represent a series of steps going from the minimisation objective for the parameters $\theta_k$ based on the KLD between $q(w|\theta)$ and $P(w|D)$ to an expression containing the terms that can be computed given a version of the model and the data - therein the variational posterior probability, the prior probability and the likelihood of the model given data:

[Math 2]

$$\theta^* = arg \min_\theta KL[q(w|\theta\|P(w|D)]$$

where KL[...] is the Kullback-Leibler divergence, and $\theta$ are the parameters of the variational distribution from which the values of w are sampled, such as values of the mean $\mu_k$ and standard deviation $\sigma_k$, and $\theta^*$ is a vector of the variational distribution parameters of all of the synapses of the model.

[Math 3]

$$= arg \min_\theta \int q(w\Big|\theta)log \frac{q(w|\theta)}{P(w)P(D|w)} dw$$

[Math 4]

$$= arg \min_\theta KL[q(w|\theta\|P(w)] - E_{q(w|\theta)}[logP(D|w)]$$

From this final expression, the following cost function can be written (Equ. 2):

[Math 5]

$$\mathcal{F}(D,\theta) \approx \sum_{i=1}^{n} \log q\big(w^{(i)}\big|\theta\big) - \log P\big(w^{(i)}\big) - \log P\big(D\big|w^{(i)}\big)$$

where $w^{(i)}$ is the sampled model w of the ith Monte Carlo integration, or the ith sample from q() during the forward propagation, which, for example, only concerns the model w, because w is what is being sampled M times.

This cost function is the Monte Carlo integration, over the M samples i, of the difference between the variational probability $q(w|\theta)$, the prior probability p(w) and a negative log likelihood (NLL) term $p(D|w)$. In the log-domain, the variational probability is calculated by summing the probability of the Monte Carlo sample of each synapse with respect to the current probability distribution, the prior probability is similarly calculated by summing the probability of each synaptic sample with respect to the prior distribution, and the negative log-likelihood evaluated using the labels of the data, and a prediction criterion such as the categorical cross-entropy, or binary cross-entropy in the case of a binary problem, over a mini-batch. These quantities can be summed in one or more Monte Carlo integrations (although often one is enough during training) over a mini-batch of the training data. Using this resulting cost (denoted $\mathcal{F}$ above), which is just a single number and is often referred to as the evidence lower bound (or ELBO), the derivative can be computed using an automatic differentiation algorithm, such as those implemented in frameworks like PyTorch and Tensorflow, to find the updates to the parameters $\theta_k$ of the variational distribution (the terms "PyTorch" and "Tensorflow" may correspond to registered trademarks). In the case of a Bayesian neural network where each of the synapses are described as Gaussian distributions $\theta = \{\mu, \sigma\}$, the parameters that are updated are the mean and standard deviation of each synaptic distribution. Often the parameter $\rho$ is trained instead of $\sigma$, where $\sigma = \log(1+\exp(\rho))$, in order to prevent $\sigma$ from assuming a negative value. Indeed, $\sigma$ should be positive, since it describes a variance. Therefore, on each Monte Carlo integration step, it is as if we are sampling one possible version of a neural network by assigning each synapse a value sampled from its Gaussian probability distribution.

The issue in variational inference based Bayesian neural networks is that for each time-step (assuming the application of the model to a time-series), for each Monte Carlo integration step, for each mini-batch of data, and for each training epoch, every parameter of the Bayesian neural network is sampled from $\theta$. In other words each synapse randomly samples a value from a normal distribution each time a multiplication will be carried out. Since random number generation, particularly Gaussian random number generation, is a computationally intensive operation in GPUs and CPUs, training and performing inference with recurrent Bayesian neural networks is prohibitive - i.e., the latency can be very high, even for small neural networks, and the energy consumption can be large too. While it might be possible to implement a solution in which synapses are only sampled on the first time-step of a Monte Carlo integration, such a solution is arguably not exploiting the Bayesian model to the full within the time-series prediction domain.

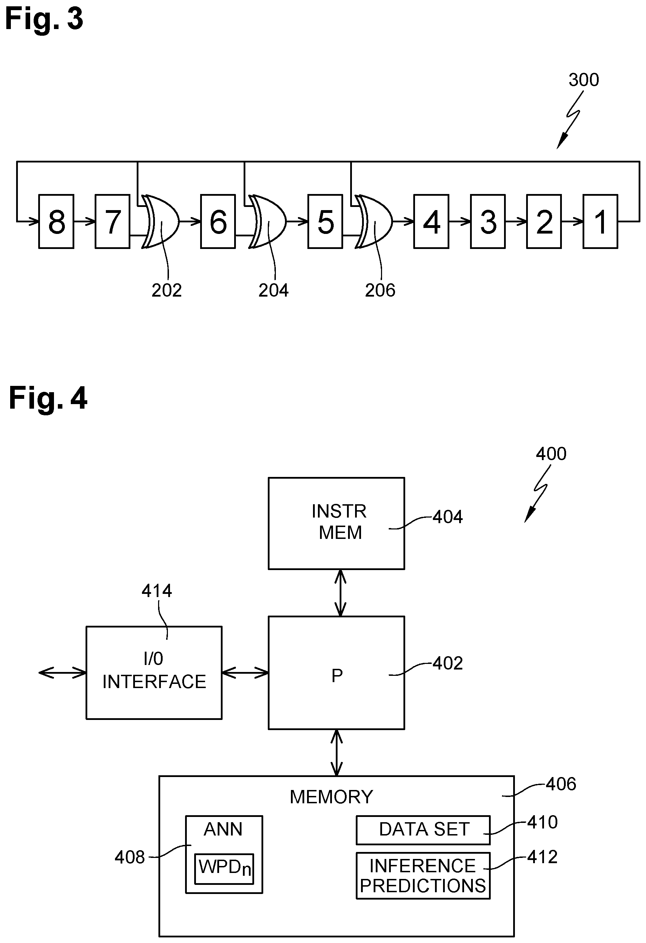

Figure 3 is a circuit diagram of a linear feedback shift register (LFSR) 300 for performing random number generation according to an example embodiment. For example, according to one example implementation, one or more processors, such as one or more GPU or CPU, comprise the circuit 300, which is shared by the synapse circuits 202 stored in a memory. The memory is for example loaded to the one or more processors, and random numbers are applied via multiplication and addition in order to generate pseudo-random values during training and/or inference using the Bayesian neural network. The circuit comprises a series arrangement of eight latches labelled 1 to 8 that shift bits from left to right in the figure, under control of a clock signal (not illustrated). An output of latch 1 feeds an input of latch 8 via a feedback line. The output of latch 7 is coupled to the input of latch 6 via a two-input XOR gate 302. In particular, the output of latch 7 is coupled to one input of the XOR gate 302, and the other input of the XOR gate 302 is coupled to the feedback line. Similarly, the outputs of latches 6 and 5 are coupled to the inputs of latches 5 and 4 via XOR gates 304 and 306 respectively.

In operation, the LFSR 300 generates pseudo-random bit strings, which constitute digitized uniform random numbers. In order to generate Gaussian random numbers that are typically used within the context of variational inference learning algorithms, operations are for example performed on a succession of uniform random numbers, such as the Box-Muller transform.

Pseudo-random number generation suitable for variational inference learning algorithms, including the Box-Muller transform, are described for example in more detail in the publication by G.E.P. Box and M.E. Muller entitled "A note on the generation of random normal deviates", Annals of Mathematical Statistics, 29(2):610-611, 1958. Alternatively, an example of a circuit that could be used for implementing sampling from a random distribution without using a pseudo-random number generator is described in the European patent application entitled *"Synapse Circuit for Variational Inference"* filed on the same day as the present application in the name of the same applicant and inventor.

Figure 4 schematically illustrates a computing device 400 implementing a neural network according to an example embodiment of the present disclosure. For example, the device 400 is configured to perform training of a Bayesian neural network and/or inference using a Bayesian neural network.

The computing device 400 comprises a processing device (P) 402 comprising one or more CPUs (Central Processing Units) under control of instructions stored in an instruction memory (INSTR MEM) 404. Alternatively, rather than CPUs, the computing system could comprise one or more NPUs (Neural Processing Units), or GPUs (Graphics Processing Units), under control of the instructions stored in the instruction memory 404.

The computing device 400 also for example comprises a further memory (MEMORY) 406, which may be implemented in a same memory device as the memory 404, or in a separate memory device. The memory 406 for example stores the Bayesian ANN in a memory region 408, such that a computer emulation of this ANN is possible. For example, the ANN is fully defined as part of a program stored by the instruction memory 404, including the definition of the structure of the ANN, i.e. the number of neurons in the input and output layers and in the hidden layers, the number of hidden layers, the activation functions applied by the neuron circuits, etc. Furthermore, the weights probability distributions $WPD_k$ of the ANN learnt during training are for example stored in the regions 408 of the memory 406. In this way, the ANN can be trained and operated within the computing environment of the computing system 400. In the case that the device 400 is used during the learning phase, a further memory region 410 of the memory 406 for example stores a dataset (DATASET) 410 used for training the ANN, although in alternative embodiments, this dataset may be stored in a remote storage system coupled to the device 400 via one or more networks. In the case that the device 400 is used for inference of the trained ANN, a further memory region (INFERENCE PREDICTIONS) 412 of the memory 406 for example stores results of inferences made using the ANN. In some embodiments, the computing device 400 also comprises an input/output interface (I/O INTERFACE) 414 for communications over such networks.

Rather than being implemented in software as described in relation with Figure 4, in some embodiments, the ANN could be implemented at least partially in hardware, such as by the circuit of Figure 2. For example, in such a case, each synapse circuit for example comprises the circuitry for storing and sampling probability distributions as described in the European patent application entitled *"Synapse Circuit for Variational Inference"* filed on 26 October 2021 in the name of the same applicant and inventor.

According to the embodiments described herein, the computing device 400 of Figure 4, or the cross-point memory array 200 of Figure 2, is configured to train a Bayesian neural network and/or to perform inference using a Bayesian neural network based on a method involving a relatively low number of sampling operations of the probability distributions of each parameter $\theta_k$ of the network.

This is for example achieved by two main features. Firstly, the neurons of the network are for example spiking neurons that generate a spike, or apply a Heaviside step function, based on an activation threshold. Secondly, the probability distributions of each parameter $\theta_k$ of the network are sampled only if the pre-synaptic neuron has generated a spike. In other cases, for each time-step, no sampling is performed, thereby reducing the overall number of sampling operations, leading a reduction in energy consumption, latency, and processing resources.

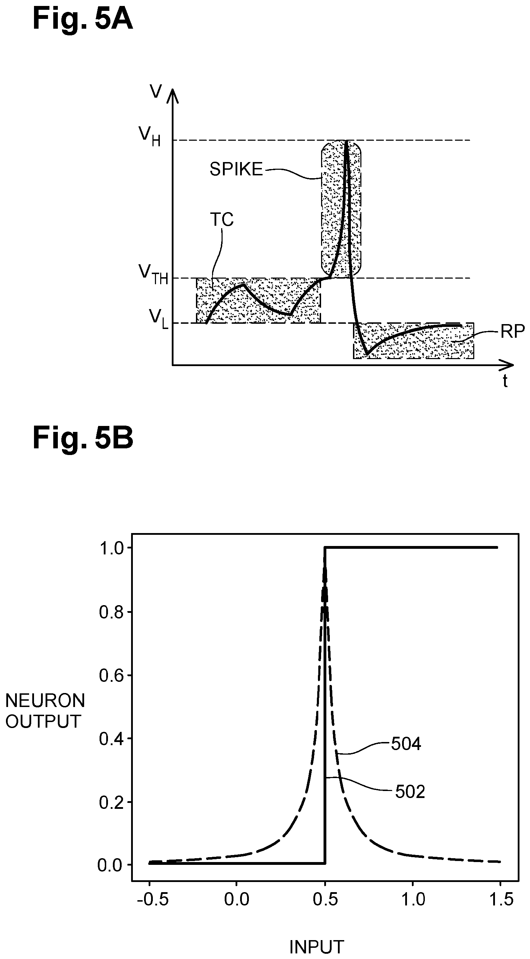

Examples of form of the spike generated by the neuron will now be described with reference to Figure 5A and 5B.

Figure 5A is a graph representing an example of the membrane voltage $V_{mem}$ of a spiking neuron as a function of time (t) according to an example embodiment. It can be seen that the membrane voltage $V_{mem}$ initially has a time constant (TC) period during which the voltage output of the neuron is between a low level $V_L$ and the activation threshold $V_{TH}$. When the membrane voltage $V_{mem}$ increases above the activation threshold $V_{TH}$, a spike is generated, during which the membrane voltage $V_{mem}$ rises above the level $V_{TH}$ to a high level $V_H$ and then falls again below $V_{TH}$. A refractory period RP then follows, during which the voltage for example falls below the low level $V_L$, and then returns to a level at or close to the low level $V_L$, but below the activation threshold $V_{TH}$.

Rather than the form illustrated in Figure 5A, it would also be possible for the spike to have another form, such as a flat pulse. For example, the spike is represented by a binary signal that transitions from one binary state to the other when the threshold is crossed. The spike length is for example equal to the time step. For example, the signal representing the spike is reset at a subsequent timestep.

Figure 5B is a graph illustrating an example of an activation function of a spiking neuron and of a surrogate gradient used during backward propagation. Figure 5B illustrated in particular the neuron output (NEURON OUTPUT) as a function of an input (INPUT), which may be the membrane voltage $V_{mem}$, or another input. For example, in some cases, the neuron has an internal parameter, such as the membrane voltage $V_{mem}$, providing a memory from one timestep to the next. The membrane voltage $V_{mem}$ is for example updated at each time step by adding a dot-product $s \cdot w^T$ corresponding to a weighted sum of the inputs of the post-synaptic neuron, where s is for example a binary vector denoting whether or not the pre-synaptic neurons feeding the post-synaptic neuron spiked, and w is the model represented by a weight vector. In alternative embodiments, the neuron may have no stored internal state, and in such a case the activation function is applied directly to the weighted sum of its inputs, calculated for example by the same dot-product $s \cdot w^T$.

A trace 502 in Figure 5B illustrates an example in which the activation function is Heaviside step function, whereby the neuron output is at 0 (s=0) if the input is less than the activation threshold (equal to 0.5 in the example of Figure 5B), and is at 1 (s=1) if the input is higher than the activation threshold. In this case, the value of the neuron output is not important, as it will be reset at the next timestep by the Heaviside step function.

A trace 504 in Figure 5B represent a surrogate function that can be used instead of the Heaviside function during calculation of the derivative of the activation function, as will be described in more detail below.

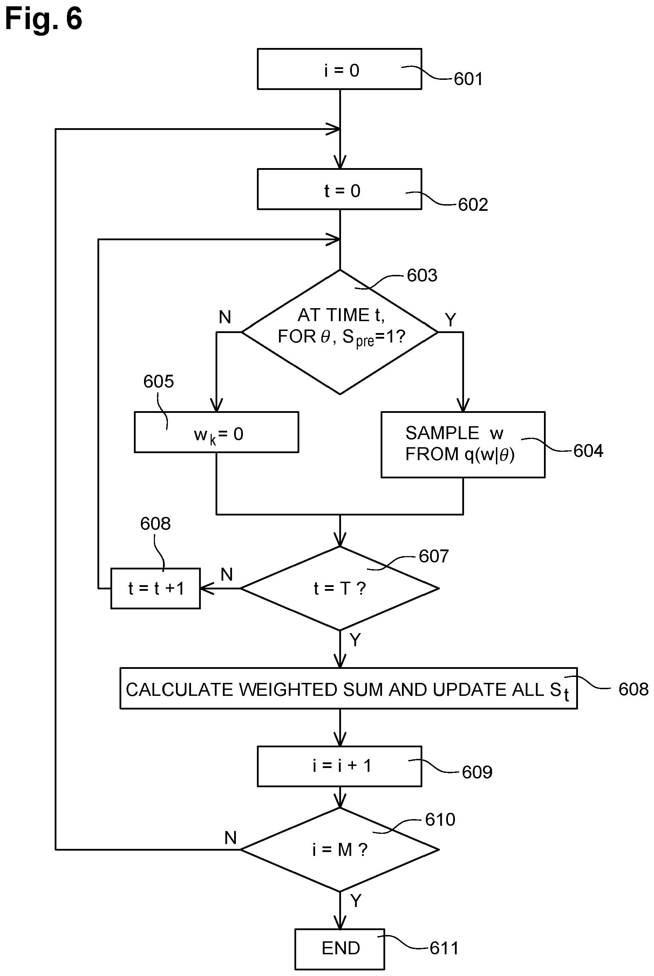

Figure 6 is a flow diagram illustrating operations in a method of forward propagation between layers in a Bayesian neural network according to an example embodiment of the present disclosure. The method of Figure 6 is for example implemented by the computing device 400 of Figure 4. In particular, instructions stored in the instruction memory 404 are for example configured to cause the method to be implemented when executed by the processing device 402. Alternatively, the method of Figure 6 is for example implemented by the circuit of Figure 2.

The method of Figure 6 is for example applied between two layers of a Bayesian neural network, such as between the layers L1 and L2 of Figure 1. It is for example the vector s that is passed from the layer of pre-synaptic neurons to the layer of post-synaptic neurons, for example from layer L1 to layer L2. This vector s represents the spikes and/or non-spikes occurring in the layer of pre-synaptic neurons. The method is for example applied in order to sample the set of parameters $\theta_k$ for the synapses linking the pre-synaptic neurons to the post-synaptic neurons of the corresponding layers. This method can for example be performed during training of the Bayesian neural network based on a training dataset, and/or during inference using the trained neural network.

In an operation 601 (i=0), a Monte Carlo iteration index i is for example initialized at 0.

In an operation 602 (t=0), a current timestep t is for example initialized at zero, or at another level.

In an operation 603 (AT TIME t, FOR $\theta$, $S_{pre}$ = 1?), it is determined whether, at the current timestep t, and for each parameter $\theta_k$ of the set of parameters $\theta$, a spike has been generated by each of the pre-synaptic neurons.

For each parameter $\theta_k$ for which a spike was generated by the corresponding pre-synaptic neuron, a weight value is sampled from the variational distribution $q(w|\theta)$ associated with the synapse in an operation 604 (SAMPLE w FROM $q(w|\theta)$). This sample is then for example summed with a current Vmem value of the corresponding post-synaptic neuron.

For each parameter $\theta_k$ for which the pre-synaptic neuron has not spiked, no weight value, or a zero weight value, is assigned to the parameter $\theta$ in an operation 605 ($w_k$=0).

In an operation 607 (t=T) after the operations 604 and/or 605, it is for example determined whether the number of forward propagations T has been performed, in other words whether t=T. If t is less than T, then t is incremented in an operation 608 (t=t+1) and operations 603 to 607 are repeated based on the new timestep. In the case of a static model, such as a model used for image processing, it can be considered that there is only one time, and T is for example equal to 1. Thus, t=T directly. In other cases, such as in the case of a recurrent neural network, T is for example chosen based on the data being processed, and for example based on the length of each data point in the time dimension. In some cases, the value of T may vary for different data points. Once t=T in operation 607, the method for example continues with an operation 608.

In an operation 608 (CALCULATE WEIGHTED SUM AND UPDATE ALL $S_t$), for each post-synaptic neuron, a weighted sum is generated based on the weights sampled from the synapses of all spiking pre-synaptic neurons feeding each post-synaptic neuron. For example, the weighted sum is of the form $s \cdot w^T$, where s is for example a binary vector denoting whether or not the pre-synaptic neurons feeding the post-synaptic neuron spiked at the previous timestep t-1, and w is the model represented by a weight vector of the weights sampled in operation 604 and/or of zero values assigned in operation 605. Furthermore, in operation 609, the internal state *Vmem* of each post-synaptic neuron is for example updated by adding $s \cdot w^T$. The membrane voltage $V_{mem}$ is also for example decayed on each timestep by multiplying it by a decay constant $\alpha$. For example, in some embodiments, the neuron model for each neuron is a discrete-time leaky integrate and fire neuron model, as described for example in the publication by Neftci, Emre O., Hesham Mostafa, and Friedemann Zenke entitled "Surrogate gradient learning in spiking neural networks: Bringing the power of gradient-based optimization to spiking neural networks." IEEE Signal Processing Magazine 36.6 (2019): 51-63.

The output vector $S_t$, which represents which neurons have and have not spiked, is for example updated at each timestep, by calculating the output activation function of the neuron, which involves applying the Heaviside function to the membrane voltage $V_{mem}$. If the membrane voltage $V_{mem}$ is below the activation threshold, the neuron output is for example evaluated as s=0, whereas if the membrane voltage $V_{mem}$ is above the activation threshold, the neuron output is for example evaluated as s=0.

In the operation 608 (i=i+1), the MC integration index i is incremented.

In a subsequent operation 610 (i=M), it is determined whether i=M, where M is the number of MC integration iterations to be applied. In some embodiments, M could be equal to 1, while in other embodiments it is for example equal to 2 or more. The number of iterations M is for example chosen based on a desired certainty of the predicted class. If the index i is less than M (branch N), then the method returns to operation 602. Once i is equal to M (branch Y), the method for example ends in an operation 611 (END).

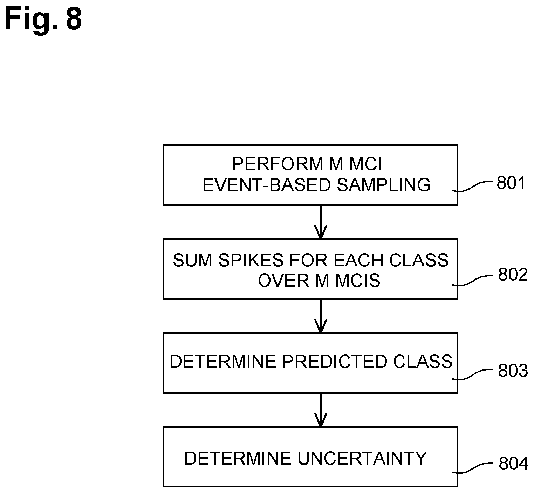

An advantage of the method of Figure 6 is that the sampling of the weight distributions is event-based, and, in particular, is only performed for synapses for which a spike occurs in the pre-synaptic neuron. This is advantageous, as it means that each time a pre-synaptic neuron does not generate a spike during a given timestep, no sampling operation is performed, and random number generation, along with associated operations for generating a sample from a Gaussian distribution, can be avoided. Additionally, the multiplication or sum operation for this synapse is avoided. This has advantages as it leads to reduced energy consumption and processing resources of the neural network. Furthermore, as will be described in more detail below with reference to Figure 8, the value of M can be relatively low compared to standard Monte Carlo inference techniques.

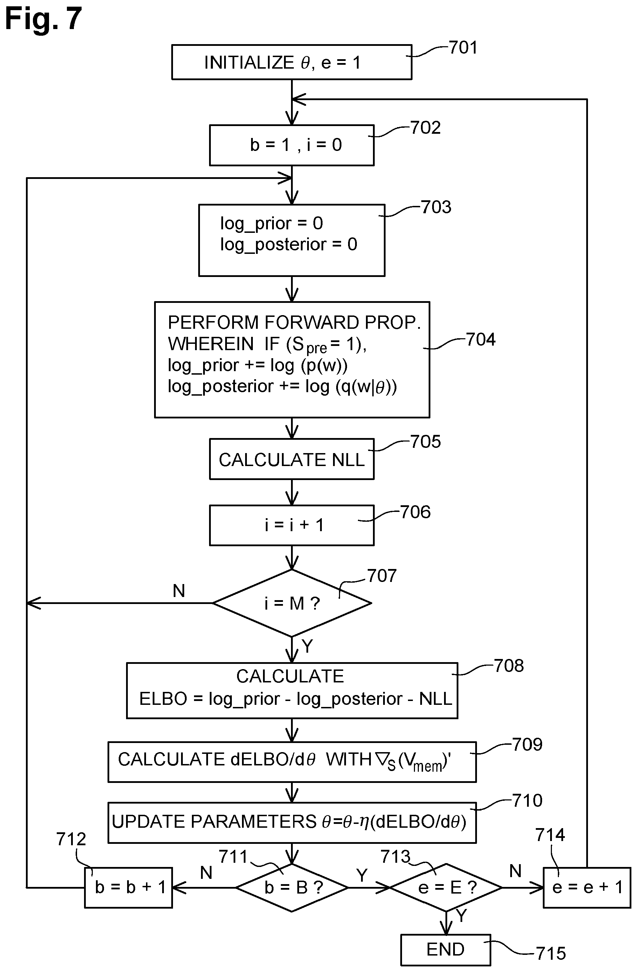

Figure 7 is a flow diagram illustrating operations in a method of training a Bayesian neural network according to an example embodiment of the present disclosure. In particular, Figure 7 illustrated an example of the application of the method of Figure 6 during a training phase of the Bayesian neural network. The method of Figure 7 is for example implemented by the synapse circuits of Figure 2 or by the computing device 400 of Figure 4.

In an operation 701 (INITIALIZE θ, e=1), the parameters θ are all for example initialized. For example, in the case that the probability distributions p(x) of the parameters θ are Gaussian distributions defined by mean $\mu$ and standard deviation σ values, the parameters θ are for example initialized by setting each of the mean $\mu$ and standard deviation σ values to given initial values, which are for example at values generated based on a normal or uniform initialization within a user defined range, or random values. Furthermore, a count value e is for example set to 1. The count value e for example represents the number of times the epoch is used, the epoch corresponding for example to the entire training dataset. For example, the training dataset is to be applied E times to the neural network during the learning process, where E is an integer equal to 1 or more.

In an operation 702 (b=1, i=0) after operation 701, a count value b is for example set to 1, this count value for example representing the current batch of the dataset that is being processed. For example, the dataset is divided into batches, each batch comprising a subdivision of the dataset consisting of one or more data points that are applied to the network to generate a set of one or more output values. For example, all of the batches are of equal size to each other. The dataset for example comprises a plurality of batches, and for example thousands or millions of batches. Furthermore, a Monte Carlo iteration index i is for example initialized at 0.

In an operation 703 (log_prior=0, log_posterior=0) after operation 702, variables log_prior and log_posterior are each initialized, for example at zero.

In an operation 704 (PERFORM FORWARD PROP. WHEREIN IF ($S_{pre}$=1), log_prior+=log(p(w)) and log($q(w|\theta)$)), forward propagation of the samples of the batch b through the Bayesian network is performed, in accordance with the method of Figure 6. Furthermore, each time there is a pre-synaptic spike for a given synapse with parameter θ (operation 603 of Figure 6), the variable log_prior is for example incremented by the log of the prior probability distribution p(w), and the variable log_posterior is for example incremented by the log of the sampled probability distribution $q(w|\theta)$. The prior

probability distribution p(w) is for example chosen based on a knowledge of the type of distribution that governs the uncertainty in the particular application of the network. Generally, a normal distribution is most appropriate, and the mean $\mu$ and standard deviation $\sigma$ values of the prior probability distribution are for example initialized. Intuitively, the mean $\mu$ describes the estimation of this parameter, and the standard deviation $\sigma$ describes the certainty of the estimation given the data seen during training.

In the operation 705 (CALCULATE NLL) after operation 704, a negative log likelihood of predictions (NLL) is for example calculated. For example, the negative log likelihood is defined as the softmax of a given relevant variable, such as the softmax of the time-to-first output neuron spike, the softmax of the low-pass filtered spike train, in other words the spiking rate, or the softmax of the internal neuron state Vmem at the final timestep of the simulation.

In a subsequent operation 706 (i=i+1), the index is for example incremented.

In a subsequent operation 707 (i=M?), it is for example determined whether i=M, where M is the number of MC integration iterations to be applied. In some embodiments, M could be equal to 1, while in other embodiments it is for example equal to 2 or more. If the index i is less than M (branch N), then the method returns to operation 703, and operations 703 to 705 are for example repeated. In the case that there is more than one Monte Carlo iteration, the values of log_prior, log_posterior and NLL are for example accumulated over all of the iterations. Once i is equal to M (branch Y), the method for example continues with updating the parameters $\theta$ of the network based on a series of operation 708 to 710.

In the operation 708 (CALCULATE ELBO = log_prior-log_posterior-NLL) after the operation 705, an evidence lower bound (ELBO) is for example calculated by substracting the variables log_posterior and NLL from the variable log_prior.

In the operation 709 (CALCULATE dELBO/d $\theta$ WITH $\nabla s(V_{mem})'$), the partial derivative of the evidence lower bound is for example calculated. In order to use the ELBO to update the parameters $\theta$ of a Bayesian spiking neural network, a standard approach would be to compute the derivative of the neuron activation function $\nabla s(V_{mem})$, where $s(V_{mem})$ denotes the neuron activation function. However, in the case that the Heaviside step function is used as shown by the trace 502 in Figure 5B, which rectifies the output, the derivative is zero everywhere besides the location of the step, where it is infinite. It is therefore not possible to learn neural network parameters using this derivative. Instead a surrogate function $\nabla s(V_{mem})'$ is used as the activation function, the surrogate function being chosen to mimic the form of the derivative, but not to evaluate to zero or infinite values. An example of such a surrogate function is illustrated by the trace 504 of Figure 5B. The example of Figure 5B is based on a half fast sigmoid function, which involves a relatively low-cost evaluation of exponential functions at every time step. This corresponds to the absolute of the internal state Vmem, put into a sigmoid function. However, there are many alternative surrogate functions that could be used, such a "straight-through estimator", which returns a constant value based on the assumption that the Heaviside step is approximating a linear function. A back propagation through time (BPTT) algorithm is for example used to calculate the partial derivatives.

In an operation 710 (UPDATE PARAMETERS $\theta = \theta - \eta(\frac{\text{dELBO}}{\text{d}\theta})$ ) after operation 709, the parameters $\theta$ are for example updated based on their previous value, the partial derivatives dELBO/d$\theta$, and on a parameter $\eta$, which is the learning rate. The learning rate is used to scale the gradients such that the parameters update in appropriate steps.

In an operation 711 (b=B?) after operation 710, it is determined whether the count value b is equal to the number B of batches of the dataset. If not (branch N), in an operation 712 (b=b+1), the count value b is incremented.

After operation 712, the method for example returns to operation 703, and operations 703 to 711 are repeated.

Once, in operation 711, b=B because all of the batches have been processed (branch Y), in an operation 713 (e=E?), it is for example determined whether the count value e is equal to the number of epochs E to be performed on the dataset. In some cases, a single epoch is applied, and E is equal to 1. If e is not equal to E (branch N), in an operation 714 (e=e+1), the count value e is incremented, and the method for example returns to operation 702, and operations 703 to 713 are for example repeated.

Once, in operation 713, e=E because all of the epochs have been processed (branch Y), the method for example ends in an operation 715 (END). The neural network has this been trained.

In some embodiments, during training, sparsity in the spiking activity of the model is enforced in order to reduce the amount of random number generation. This is for example achieved by introducing an L1-norm of the sum of the number spikes of each of the neurons in the model. For example, the ELBO calculation described in relation with operation 708 becomes:

[Math 6]

$$ELBO = \log\_prior - \log_{posterior} - NLL + \sum_{i=0}^{N} |s_i|$$

where R is the number of neurons in the network.

After variational inference has been used to determine the parameters of all of the distributions θ as described in relation to Figure 7, the Bayesian neural network can be used in inference. Besides the lack of a gradient calculation, parameter updating and calculation of variational and prior probabilities, inference operates in a similar fashion to learning, in that a data-point or batch is presented to the neural network and weights are sampled whenever a synapse experiences a pre-synaptic spike, leading to a set of outputs. However, there are some other differences that will become clear from the description of Figure 8.

Figure 8 is a flow diagram illustrating operations in a method of inference using a Bayesian neural network according to an example embodiment of the present disclosure. In particular, Figure 8 illustrated an example of the application of the method of Figure 6 during an inference phase of the trained Bayesian neural network. The method of Figure 8 is for example implemented by the synapse circuits of Figure 2 or by the computing device 400 of Figure 4.

In an operation 801 (PERFORM MCIs WITH EVENT-BASED SAMPLING), forward propagation of the input data through the Bayesian network is performed over M Monte Carlo iterations, in accordance with the method of Figure 6, and in particular using event-based sampling, such that the probability distributions are sampled only when the pre-synaptic neuron has spiked. The spikes occurring at the outputs of the Bayesian neural network during each Monte Carlo inference are for example recorded.

In- a subsequent operation 802 (SUM SPIKES FOR EACH CLASS OVER M MCIs), the number of spikes recorded for each class over the M Monte Carlo inferences are for example summed in order to generate a spike count per class, if for example the spike counter per class is used to determine the prediction of the model.

In an operation 803 (DETERMINE PREDICTED CLASS) after the operation 802, the predicted class of the inference operation is for example determined as the class having the highest spike count.

In an operation 804 (DETERMINE UNCERTAINTY) after the operation 803, an uncertainly associated with the predicted class is for example determined. For example, the uncertainty is evaluated based on the spike count of the predicted class divided by the spike count of the other classes.

Thus, the method of Figure 8 includes several differences with respect to a standard Monte Carlo inference.

Firstly, in a standard variational recurrent neural network model, several Monte Carlo inferences are performed: N forward passes, with N different instances of w sampled from q(w|θ) resulting in a distribution composed of N points. The outputs would have a continuous value, most often a probability value between 0 and 1 after the application of a softmax function, and therefore the prediction and its uncertainty can be ascertained by looking at these output distributions. In contrast, in the spiking variational inference approach as proposed herein, instead of sampling from all synapses on the first time step of each Monte Carlo inference (or at each time step), samples are drawn for individual synapses on each time step if there was a pre-synaptic spike. Thus, instead of N MC inferences, spiking variational inference models execute M MC inferences. It has been found that to reach a given prediction accuracy, M can be lower than N. This is due to the fact that according to the method proposed herein, the sampling is focused on the parameters associated with neurons that have spiked, these parameters being more important for the particular input data-point or initial network state. The sampling operation is thus applied where it has most significance.

The second important distinction is in how the uncertainty can be quantified. The uncertainty in a standard recurrent Bayesian neural network can be obtained by, after N MC inferences, computing a measure of the output predictive distributions, such as the standard deviation or the categorical entropy. In a spiking variational inference model, we instead look at the ratio of the number of spikes produced by each of the output neurons during the M MC inferences. Certainty of a prediction can be defined as the ratio of the number of spikes produced within a certain time window by the neuron that produced the most spikes (and therefore denotes to what class the input belongs), divided by the total spike count, or by the number of spikes produced in the same interval by all of the other neurons, or by the neuron with the second largest number of spikes. If the negative log-likelihood has been defined using spike count information, then this is similar to calculating the categorical entropy as is often used in standard variational inference models.

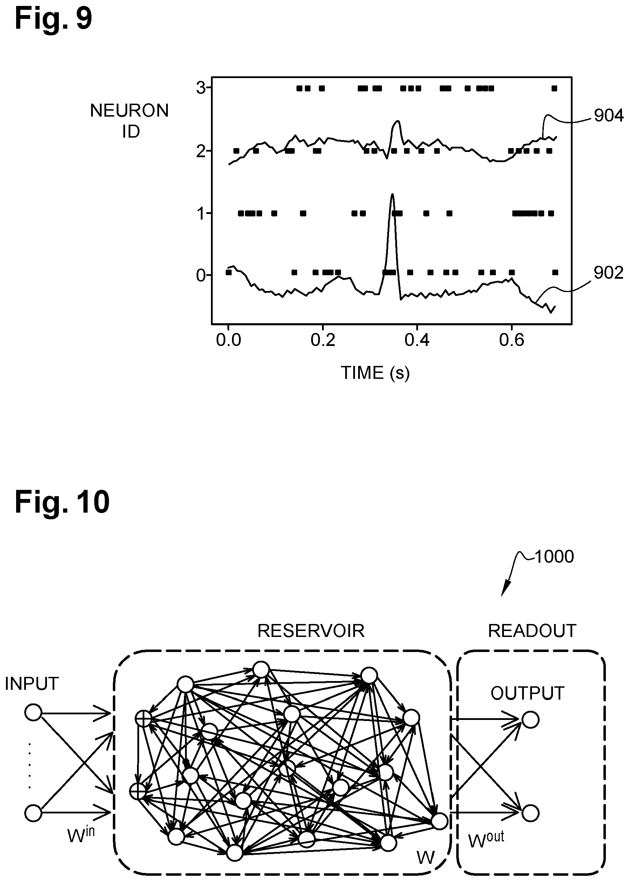

An example application of the Bayesian neural network and methods of training and inference will now be described with reference to Figures 9 to 13. In particular, the application of detecting arrhythmic heartbeats from delta modulated ECG signals is considered

Figure 9 is a graph illustrating an example of an electrocardiogram (ECG) dataset against time (TIME(s)). Two ECG channels, shown by traces 902 and 904, are delta modulated in four streams of UP and DOWN change events, produced by four corresponding neurons having neuron identifiers (NEURON ID) 0, 1, 2 and 3. The neuron 0 spikes to produce an UP change event, represented by a dot, each time the trace 902 increases by a certain amount and the neuron 1 spikes to produce a DOWN change event, represented by a dot, each time the trace 902 decreases by a certain amount. Similarly, the neuron 2 spikes to produce an UP change event, represented by a dot, each time the trace 904 increases by a certain amount and the neuron 3 spikes to produce a DOWN change event, represented by a dot, each time the trace 904 decreases by a certain amount. The input spikes are for example fed, in a fully-connected feed-forward fashion, to a recurrent layer of a spiking neural network with all-to-all connectivity, an example of which is shown in Figure 10.

Figure 10 schematically illustrates a recurrent layer 1000 of a spiking neural network with all-to-all connectivity according to an example embodiment of the present disclosure.

The layer 1000 includes two input neurons (INPUT) that feedforward inputs forming the model input $W^{in}$, in a fully-connected pattern, to a hidden recurrent layer (RESERVOIR) of spiking neurons applying the model $W$. The recurrent layer of neurons feeds forward to an output layer (READOUT) formed of two neurons that provides the model output $W^{out}$. In particular, the neurons in the reservoir layer connect amongst themselves and also send fully-connected feedforward connections to the two output layer neurons.

One of the output neurons fires to denote a healthy heartbeat waveform, and the other output neuron fires to denote an arrhythmic one.

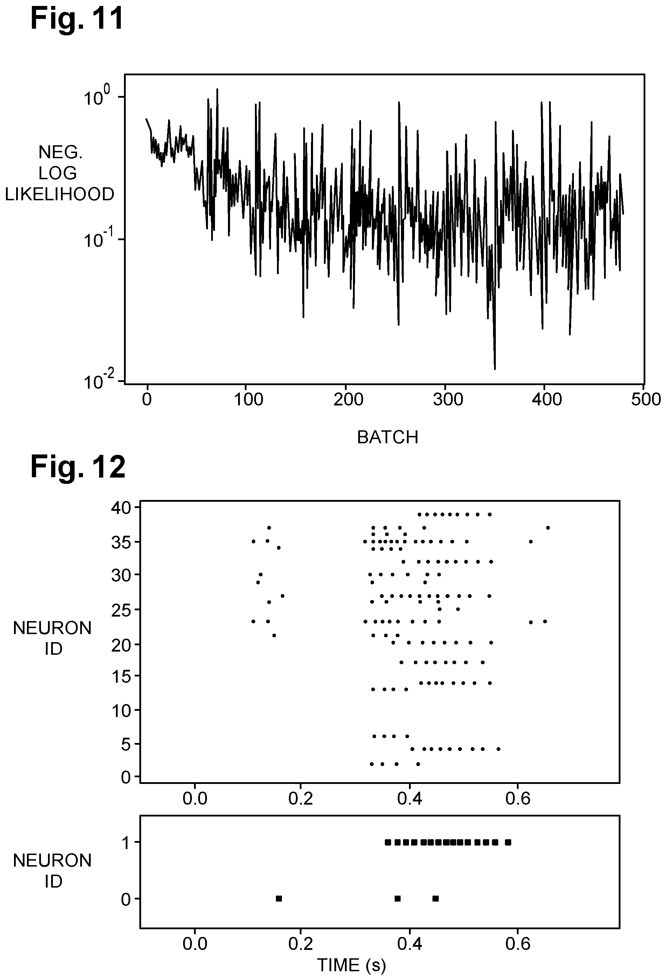

Figure 11 is a graph representing negative log likelihood (NEG. LOG LIKELIHOOD) for batches of a test dataset. The negative log-likelihood is for example defined as the softmax of the spike counts during one input waveform, as expressed as follows:

[Math 7]

$$\log p(D|w) = -NLL(softmax(\sum_{t=0}^{T} s_0, \sum_{t=0}^{T} s_1))$$

where $s_0$ is a spike represented a healthy heart, and $s_1$ is a spike representing an arrhythmic heartbeat.

A Gaussian variational posterior is for example used such that each synapse is defined by a mean and a standard deviation. A Gaussian prior distribution is also for example used. In order to enforce sparsity in the spiking activity of the model, thereby reducing the amount of random number generation, an L1-norm of the sum of the number spikes of the R neurons in the model, recorded during the presentation of an input waveform, is for example added to the ELBO, as follows:

[Math 8]

$$ELBO += \varphi \sum_{i=0}^{R} |s_i|$$

Backpropagation through time is performed, as for example described in the publication by Werbos, Paul J. entitled "Backpropagation through time: what it does and how to do it.", Proceedings of the IEEE 78.10 (1990): 1550-1560. Surrogate gradients for the neurons are for example used to train the model, as described above with reference to Figure 7.

As represented in Figure 11, the negative log likelihood decreases with successive batches of input heartbeat waveforms, and after 500 inputs batches, the model converges to a best or optimal configuration of Θ. By performing inference as described above with reference to Figure 8, the prediction accuracy was found to be high at 97%. The neuron that produced the largest number of spikes during the presentation of an input was taken to denote the class to which the input belongs.

Figure 12 shows raster plots of time stamps of spikes emitted by a neuron of the reservoir layer and of the output layer of Figure 10. Figure 12 shows in particular at what time steps each neuron spiked during a presentation of an arrhythmic heartbeat (class 1). It can be seen that the Bayesian spiking neural network successfully identified this and, over the M Monte Carlo inferences, output neuron 1 spiked a greater number of times than output neuron 0.

Compared to a standard recurrent Bayesian neural network, it has been shown that the total number of random number generations over the entire test dataset was reduced by three orders of magnitude. This demonstrates that spiking variational inference is very capable of reducing the training and inference requirements of Bayesian neural network models.

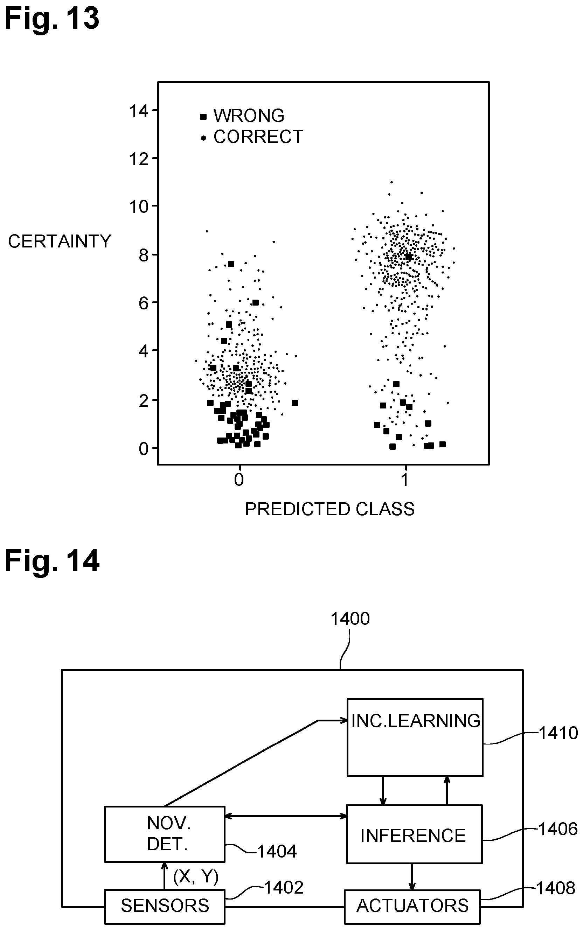

Figure 13 is a plot of certainty of all predictions made on a dataset. Each prediction is shown as a point, the lighter points denoting correct predictions (CORRECT) and the darker points denoting wrong predictions (WRONG). The x-value (PREDICTED CLASS) denotes what class the network predicted for this data point. The y-axis plots the certainty (CERNTAINTY) of these predictions.

It can be seen from Figure 13 that incorrect predictions were much less certain that correct ones, indicating that the model has learned to represent some useful uncertainties in the dataset. In order to gate potentially harmful safety-critical actions, a threshold is for example applied to these certainties, below which an action would not be taken by a system.

Figure 14 schematically illustrates a hardware system 1400 according to an example embodiment of the present disclosure. This system 1400 may be implemented entirely in hardware, including for example the circuit of Figure 2, or at least some elements may be implemented in software, for example similar to the implementation of Figure 4. The system 1400 is for example configured to implement the methods of Figures 6, 7 and/or 8, as will now be described in more detail.

The system 1400 for example comprises one or more sensors (SENSORS) 1402, which for example comprise one or more image sensors, depth sensors, heat sensors, microphones, or any other type of sensor. The one or more sensors 1402 provide new stimuli data points to a novelty detector (NOV. DET.) 1404. The novelty detector 1404 is configured to detect when an input value sensed by the sensor corresponds to a new class than has not yet been learnt by the network. For example, the novelty detector 1404 detects novelty based on the uncertainty of the predictions. For this, the novelty detector 1404 for example supplies the input value to an inference module (INFERENCE) 1406, which for example comprises a Bayesian neural network trained according to the method as described herein. The inference module 1406 is for example configured to process the input data, for example in order to perform classification and generate a level of uncertainty. If the level of uncertainty of below a given novelty threshold, the output of the inference module 1406, corresponding, for example, to a predicted label, is for example provided to one or more actuators (ACTUATORS) 1408, which are for example controlled based on the predicated label. For example, the actuators 1408 could include a robot, such as a robotic arm trained to pull up weeds, or to pick ripe fruit from a tree, or could include automatic steering or breaking systems in a vehicle, or operations of circuit, such as waking up from or entering into a sleep mode. Furthermore, in some cases, the actuators are for example also controlled based on the uncertainty value. For example, in the case of uncertainty above an uncertainty threshold level, the one or more actuators are controlled in a first manner, whereas in the case of uncertainty below the certainty threshold level, the one or more actuators are controlled in a second manner different to the first manner. In some cases, the second manner of controlling the actuators is associated with a lower safety risk than the first manner of controlling the actuators.

If the level of uncertainty is equal to or greater than the novelty threshold, the input value is for example considered to correspond to a new class. The novelty detector 1404 then for example supplies the input value to an incremental learning module (INC. LEARNING) 1410, which is for example configured to learn new classes of input data, and train the neural network implemented by the inference module 1406, based on incremental learning. For example, such training is triggered when the number of detected novel data values reaches a certain threshold. Incremental learning is described in more detail in the publication by Rebuffi, Sylvestre-Alvise, et al. entitled "icarl: Incremental classifier and representation learning.", Proceedings of the IEEE conference on Computer Vision and Pattern Recognition, 2017, and in the publication by Parisi, German I., et al. entitled "Continual lifelong learning with neural networks: A review.", Neural Networks 113 (2019)54-71.

Of course, in some embodiments the novelty detector 1404 and incremental learning module 1410 of the system 1400 could be omitted, the system for example being configured to perform only inference.

Various embodiments and variants have been described. Those skilled in the art will understand that certain features of these embodiments can be combined and other variants will readily occur to those skilled in the art, insofar this falls within the scope of the invention as defined by the appended claims.

Finally, the practical implementation of the embodiments and variants described herein is within the capabilities of those skilled in the art based on the functional description provided hereinabove.

**Claims**

1. A method of inference using a Bayesian neural network, the method being implemented by a circuit (200) and/or by execution of instructions by a processing device (402), the method comprising performing multiple Monte Carlo inferences, each Monte Carlo inference comprising performing forward propagation by a synapse between a pre-synaptic neuron (N1-N4) and a post-synaptic neuron (N1'-N4') in the Bayesian neural network, the forward propagation comprising, for at least a first time instant:

   (a) determining whether the pre-synaptic neuron (N1-N4) has spiked;
   (b) if the pre-synaptic neuron is determined to have spiked, sampling a weight value for the synapse from a variational distribution ($q(w|\theta)$) and generating a weighted sum using the sampled weight value; and
   (c) if the pre-synaptic neuron (N1-N4) is determined not to have spiked, assigning no weight value, or a zero weight value, to the synapse;

   the method further comprising:

   summing the number of spikes generated by each output neuron of the Bayesian neural network during each Monte Carlo inference;
   determining a predicted class based on an output neuron having the greatest number of spikes, wherein the output neuron having the greatest number of spikes denotes the class to which an input to the Bayesian neural network belongs, wherein the input comprises input signals captured by one or more sensors; and generating one or more control signals for controlling at least one actuator based on the predicted class.

2. The method of claim 1, comprising repeating operations (a) to (c) for each synapse of the Bayesian neural network (100, 1000), and generating an output value of the Bayesian neural network (100, 1000) based on the weighted sums.

3. The method of claim 1 or 2, comprising repeating operations (a) to (c) for at least one second time instant after the first time instant.

4. The method of any of claims 1 to 3, wherein each synapse is associated with a normal probability distribution ($q(w|\theta)$) defined by parameters comprising at least a mean ($\mu$) and standard deviation ($\sigma$), wherein sampling the weight value comprises sampling the weight value from the normal probability distribution ($q(w|\theta)$) based on the associated mean and standard deviation.

5. The method of any of claims 1 to 4, further comprising generating a certainty value based on the number of spikes of the predicted class and on the number of spikes of one or more of the other classes.

6. The method of any of claims 1 to 5, wherein the one or more control signals are also generated based on the certainty value.

7. A method of training a Bayesian neural network (100, 1000), the method being implemented by a circuit (200) and/or by execution of instructions by a processing device (402), the method comprising:

- performing forward propagation of batches of a training dataset, wherein performing forward propagation comprises:

performing forward propagation by a synapse between a pre-synaptic neuron (N1-N4) and a post-synaptic neuron (N1'-N4') in the Bayesian neural network, comprising, for at least a first time instant:

(a) determining whether the pre-synaptic neuron (N1-N4) has spiked;
(b) if the pre-synaptic neuron is determined to have spiked, sampling a weight value for the synapse from a variational distribution ($q(w|\theta)$) and generating a weighted sum using the sampled weight value; and
(c) if the pre-synaptic neuron (N1-N4) is determined not to have spiked, assigning no weight value, or a zero weight value, to the synapse;

wherein each synapse is associated with a normal probability distribution ($q(w|\theta)$) defined by parameters comprising at least a mean ($\mu$) and standard deviation ($\sigma$), wherein sampling the weight value comprises sampling the weight value from the normal probability distribution ($q(w|\theta)$) based on the associated mean and standard deviation;
wherein the method further comprises:

- performing back propagation in order to update the parameters ($\theta$) associated with at least some of the synapses, wherein the Bayesian neural network is trained such that it is configured to:
- perform multiple Monte Carlo inferences, each Monte Carlo inference comprising performing forward propagation;
- sum the number of spikes generated by each output neuron of the Bayesian neural network during each Monte Carlo inference;
- determine a predicted class based on an output neuron having the greatest number of spikes, wherein the output neuron having the greatest number of spikes denotes the class to which an input to the Bayesian neural network belongs, wherein the input comprises input signals captured by one or more sensors; and
- generate one or more control signals for controlling at least one actuator based on the predicted class.

8. The method of claim 7, wherein back propagation is based on a cost function comprising an L1-norm of the total number of spikes generated by the neurons of the Bayesian neural network (100, 1000).

9. The method of claim 7 or 8, wherein each neuron is configured to implement a neuron activation function based on a Heaviside step function, and wherein performing the back propagation is based on a partial derivative of an evidence lower bound (ELBO) in which the neuron activation function is substituted by a surrogate function rather than the Heaviside step function.

10. A computer program product storing instructions that cause the method of any of claims 1 to 9 to be implemented when the instructions are executed by a processing device.

11. A circuit for performing inference using a Bayesian neural network, the inference comprising performing multiple Monte Carlo inferences, each Monte Carlo inference comprising performing forward propagation by a synapse between a pre-synaptic neuron (N1-N4) and a post-synaptic neuron (N1'-N4') in a Bayesian neural network, the circuit being configured to perform the forward propagation for at least a first time instant, the circuit comprising:

a first circuit configured, for at least the first time instance, to determine whether the pre-synaptic neuron (N1-N4) has spiked; and
a sampling circuit configured, for at least the first time instance:

- if the pre-synaptic neuron (N1-N4) is determined to have spiked, to sample a weight value for the synapse from a variational distribution ($q(w|\theta)$) and generating a weighted sum using the sampled weight value; and
- if the pre-synaptic neuron (N1-N4) is determined not to have spiked, to assigning no weight value, or a zero weight value, to the synapse;

the circuit being further configured to:

- sum the number of spikes generated at each output of the Bayesian neural network during each Monte Carlo inference;
- determine a predicted class based on an output neuron having the greatest number of spikes, wherein the output neuron having the greatest number of spikes denotes the class to which an input to the Bayesian neural network belongs, wherein the input comprises input signals captured by one or more sensors; and
- generate one or more control signals for controlling at least one actuator based on the predicted class.

12. A circuit for training a Bayesian neural network (100, 1000), the circuit being configured to:

- perform forward propagation of batches of a training dataset, wherein performing forward propagation comprises:

performing forward propagation by a synapse between a pre-synaptic neuron (N1-N4) and a post-synaptic neuron (N1'-N4') in the Bayesian neural network, comprising, for at least a first time instant:

(a) determining whether the pre-synaptic neuron (N1-N4) has spiked;
(b) if the pre-synaptic neuron is determined to have spiked, sampling a weight value for the synapse from a variational distribution ($q(w|\theta)$) and generating a weighted sum using the sampled weight value; and
(c) if the pre-synaptic neuron (N1-N4) is determined not to have spiked, assigning no weight value, or a zero weight value, to the synapse;

wherein each synapse is associated with a normal probability distribution ($q(w|\theta)$) defined by parameters comprising at least a mean ($\mu$) and standard deviation ($\sigma$), wherein sampling the weight value comprises sampling the weight value from the normal probability distribution ($q(w|\theta)$) based on the associated mean and standard deviation;
wherein the circuit is further configured to:

- perform back propagation in order to update the parameters ($\theta$) associated with at least some of the synapses, wherein the Bayesian neural network is trained such that it is configured to:
- perform multiple Monte Carlo inferences, each Monte Carlo inference comprising performing forward propagation;
- sum the number of spikes generated by each output neuron of the Bayesian neural network during each Monte Carlo inference;
- determine a predicted class based on an output neuron having the greatest number of spikes, wherein the output neuron having the greatest number of spikes denotes the class to which an input to the Bayesian neural network belongs, wherein the input comprises input signals captured by one or more

14

sensors; and
- generate one or more control signals for controlling at least one actuator based on the predicted class.

**Patentansprüche**

1. Ein Verfahren zur Inferenz unter Verwendung eines Bayes'schen neuronalen Netzes,

   wobei das Verfahren durch eine Schaltung (200) und/oder durch Ausführung von Anweisungen durch eine Verarbeitungs-Einrichtung (402) implementiert wird,
   wobei das Verfahren das Durchführen mehrerer Monte-Carlo-Inferenzen aufweist,
   wobei jede Monte-Carlo-Inferenz das Durchführen einer Vorwärts-Propagierung durch eine Synapse zwischen einem prä-synaptischen Neuron (N1-N4) und einem post-synaptischen Neuron (N1'-N4') in dem Bayes'schen neuronalen Netz aufweist,
   wobei die Vorwärts-Propagierung, für wenigstens einen ersten Zeitpunkt, Folgendes aufweist:

   (a) Bestimmen, ob das prä-synaptische Neuron (N1-N4) gefeuert hat;
   (b) wenn bestimmt wird, dass das prä-synaptische Neuron gefeuert hat, Abtasten eines Gewichtswerts für die Synapse aus einer Variations-Verteilung ($q(w|\theta)$) und Erzeugen einer gewichteten Summe unter Verwendung des abgetasteten Gewichtswerts; und
   (c) wenn bestimmt wird, dass das prä-synaptische Neuron (N1-N4) nicht gefeuert hat, Zuweisen keines Gewichtswerts oder eines Null-Gewichtswerts zu der Synapse;

   wobei das Verfahren ferner Folgendes aufweist:

   Summieren der Anzahl von Feuerereignissen bzw. Spikes, die von jedem Ausgabe-Neuron des Bayes'schen neuronalen Netzes während jeder Monte-Carlo-Inferenz erzeugt werden;
   Bestimmen einer vorhergesagten Klasse basierend auf einem Ausgabe-Neuron mit der größten Anzahl von Spikes, wobei das Ausgabe-Neuron mit der größten Anzahl von Spikes die Klasse bezeichnet, zu der eine Eingabe in das Bayes'sche neuronale Netz gehört, wobei die Eingabe Eingabe-Signale aufweist, die von einem oder mehreren Sensoren erfasst werden; und
   Erzeugen eines oder mehrerer Steuer-Signale zum Steuern wenigstens eines Aktuators basierend auf der vorhergesagten Klasse.

2. Das Verfahren nach Anspruch 1, aufweisend das Wiederholen der Operationen (a) bis (c) für jede Synapse des Bayes'schen neuronalen Netzes (100, 1000) und das Erzeugen eines Ausgabewerts des Bayes'schen neuronalen Netzes (100, 1000) basierend auf den gewichteten Summen.

3. Das Verfahren nach Anspruch 1 oder 2, aufweisend das Wiederholen der Operationen (a) bis (c) für wenigstens einen zweiten Zeitpunkt nach dem ersten Zeitpunkt.

4. Das Verfahren nach einem der Ansprüche 1 bis 3, wobei jede Synapse einer Normal-Wahrscheinlichkeits-Verteilung ($q(w|\theta)$) zugeordnet ist, die durch Parameter definiert ist, die wenigstens einen Mittelwert ($\mu$) und eine Standardabweichung ($\sigma$) aufweisen, wobei das Abtasten des Gewichtswerts das Abtasten des Gewichtswerts aus der Normal-Wahrscheinlichkeits-Verteilung ($q(w|\theta)$) basierend auf dem zugeordneten Mittelwert und der Standardabweichung aufweist.

5. Das Verfahren nach einem der Ansprüche 1 bis 4, ferner aufweisend das Erzeugen eines Sicherheitswerts basierend auf der Anzahl von Spikes der vorhergesagten Klasse und auf der Anzahl von Spikes einer oder mehrerer der anderen Klassen.

6. Das Verfahren nach einem der Ansprüche 1 bis 5, wobei das eine oder die mehreren Steuer-Signale auch basierend auf dem Sicherheitswert erzeugt werden.

7. Ein Verfahren zum Trainieren eines Bayes'schen neuronalen Netzes (100, 1000),

   wobei das Verfahren durch eine Schaltung (200) und/oder durch Ausführung von Anweisungen durch eine Verarbeitungs-Einrichtung (402) implementiert wird,

wobei das Verfahren Folgendes aufweist:

- Durchführen einer Vorwärts-Propagierung von Batches eines Trainings-Datensatzes, wobei das Durchführen der Vorwärts-Propagierung Folgendes aufweist:
- Durchführen einer Vorwärts-Propagierung durch eine Synapse zwischen einem prä-synaptischen Neuron (N1-N4) und einem post-synaptischen Neuron (N1'-N4') in dem Bayes'schen neuronalen Netz, aufweisend, für wenigstens einen ersten Zeitpunkt:

(a) Bestimmen, ob das prä-synaptische Neuron (N1-N4) gefeuert hat;
(b) wenn bestimmt wird, dass das prä-synaptische Neuron gefeuert hat, Abtasten eines Gewichtswerts für die Synapse aus einer Variations-Verteilung ($q(w|\theta)$) und Erzeugen einer gewichteten Summe unter Verwendung des abgetasteten Gewichtswerts; und
(c) wenn bestimmt wird, dass das prä-synaptische Neuron (N1-N4) nicht gefeuert hat, Zuweisen keines Gewichtswerts oder eines Null-Gewichtswerts zu der Synapse;

wobei jede Synapse einer Normal-Wahrscheinlichkeits-Verteilung ($q(w|\theta)$) zugeordnet ist, die durch Parameter definiert ist, die wenigstens einen Mittelwert ($\mu$) und eine Standardabweichung ($\sigma$) aufweisen,
wobei das Abtasten des Gewichtswerts das Abtasten des Gewichtswerts aus der Normal-Wahrscheinlichkeits-Verteilung ($q(w|\theta)$) basierend auf dem zugeordneten Mittelwert und der Standardabweichung aufweist;
wobei das Verfahren ferner Folgendes aufweist:
Durchführen einer Rückwärts-Propagierung, um die Parameter ($\theta$), die wenigstens einigen der Synapsen zugeordnet sind, zu aktualisieren, wobei das Bayes'sche neuronale Netz so trainiert wird, dass es eingerichtet ist zum:

- Durchführen mehrerer Monte-Carlo-Inferenzen, wobei jede Monte-Carlo-Inferenz das Durchführen einer Vorwärts-Propagierung aufweist;
- Summieren der Anzahl von Feuerereignissen bzw. Spikes, die von jedem Ausgabe-Neuron des Bayes'schen neuronalen Netzes während jeder Monte-Carlo-Inferenz erzeugt werden;
- Bestimmen einer vorhergesagten Klasse basierend auf einem Ausgabe-Neuron mit der größten Anzahl von Spikes, wobei das Ausgabe-Neuron mit der größten Anzahl von Spikes die Klasse bezeichnet, zu der eine Eingabe in das Bayes'sche neuronale Netz gehört, wobei die Eingabe Eingabe-Signale aufweist, die von einem oder mehreren Sensoren erfasst werden; und
- Erzeugen eines oder mehrerer Steuer-Signale zum Steuern wenigstens eines Aktuators basierend auf der vorhergesagten Klasse.

8. Das Verfahren nach Anspruch 7, wobei die Rückwärts-Propagierung auf einer Kostenfunktion basiert, die eine L1-Norm der Gesamtanzahl von Spikes aufweist, die von den Neuronen des Bayes'schen neuronalen Netzes (100, 1000) erzeugt werden.

9. Das Verfahren nach Anspruch 7 oder 8, wobei jedes Neuron eingerichtet ist zum Implementieren einer Neuron-Aktivierungs-Funktion basierend auf einer Heaviside-Stufenfunktion, und wobei das Durchführen der Rückwärts-Propagierung auf einer partiellen Ableitung einer Evidenz-Untergrenze bzw. Evidence Lower Bound (ELBO) basiert, bei der die Neuron-Aktivierungs-Funktion durch eine Ersatzfunktion anstatt der Heaviside-Stufenfunktion substituiert wird.

10. Ein Computer-Programmprodukt, das Anweisungen speichert, die bewirken, dass das Verfahren nach einem der Ansprüche 1 bis 9 implementiert wird, wenn die Anweisungen durch eine Verarbeitungs-Einrichtung ausgeführt werden.

11. Eine Schaltung zum Durchführen von Inferenz unter Verwendung eines Bayes'schen neuronalen Netzes, wobei die Inferenz das Durchführen mehrerer Monte-Carlo-Inferenzen aufweist, wobei jede Monte-Carlo-Inferenz das Durchführen einer Vorwärts-Propagierung durch eine Synapse zwischen einem prä-synaptischen Neuron (N1-N4) und einem post-synaptischen Neuron (N1'-N4') in einem Bayes'schen neuronalen Netz aufweist, wobei die Schaltung eingerichtet ist zum Durchführen der Vorwärts-Propagierung für wenigstens einen ersten Zeitpunkt, wobei die Schaltung Folgendes aufweist:

eine erste Schaltung, die eingerichtet ist, für wenigstens den ersten Zeitpunkt, zu bestimmen, ob das prä-synaptische Neuron (N1-N4) gefeuert hat; und

eine Abtast-Schaltung, die eingerichtet ist, für wenigstens den ersten Zeitpunkt:

- wenn bestimmt wird, dass das prä-synaptische Neuron (N1-N4) gefeuert hat, einen Gewichtswert für die Synapse aus einer Variations-Verteilung ($q(w|\theta)$) abzutasten und eine gewichtete Summe unter Verwendung des abgetasteten Gewichtswerts zu erzeugen; und
- wenn bestimmt wird, dass das prä-synaptische Neuron (N1-N4) nicht gefeuert hat, keinen Gewichtswert oder einen Null-Gewichtswert der Synapse zuzuweisen;

wobei die Schaltung ferner eingerichtet ist zum:

- Summieren der Anzahl von Feuerereignissen bzw. Spikes, die an jedem Ausgang des Bayes'schen neuronalen Netzes während jeder Monte-Carlo-Inferenz erzeugt werden;
- Bestimmen einer vorhergesagten Klasse basierend auf einem Ausgabe-Neuron mit der größten Anzahl von Spikes, wobei das Ausgabe-Neuron mit der größten Anzahl von Spikes die Klasse bezeichnet, zu der eine Eingabe in das Bayes'sche neuronale Netz gehört, wobei die Eingabe Eingabe-Signale aufweist, die von einem oder mehreren Sensoren erfasst werden; und
- Erzeugen eines oder mehrerer Steuer-Signale zum Steuern wenigstens eines Aktuators basierend auf der vorhergesagten Klasse.

12. Eine Schaltung zum Trainieren eines Bayes'schen neuronalen Netzes (100, 1000), wobei die Schaltung eingerichtet ist zum:

- Durchführen einer Vorwärts-Propagierung von Batches eines Trainings-Datensatzes, wobei das Durchführen der Vorwärts-Propagierung Folgendes aufweist:

Durchführen einer Vorwärts-Propagierung durch eine Synapse zwischen einem prä-synaptischen Neuron (N1-N4) und einem post-synaptischen Neuron (N1'-N4') in dem Bayes'schen neuronalen Netz, aufweisend, für wenigstens einen ersten Zeitpunkt:

(a) Bestimmen, ob das prä-synaptische Neuron (N1-N4) gefeuert hat;
(b) wenn bestimmt wird, dass das prä-synaptische Neuron gefeuert hat, Abtasten eines Gewichtswerts für die Synapse aus einer Variations-Verteilung ($q(w|\theta)$) und Erzeugen einer gewichteten Summe unter Verwendung des abgetasteten Gewichtswerts; und
(c) wenn bestimmt wird, dass das prä-synaptische Neuron (N1-N4) nicht gefeuert hat, Zuweisen keines Gewichtswerts oder eines Null-Gewichtswerts zu der Synapse;

wobei jede Synapse einer Normal-Wahrscheinlichkeits-Verteilung ($q(w|\theta)$) zugeordnet ist, die durch Parameter definiert ist, die wenigstens einen Mittelwert ($\mu$) und eine Standardabweichung ($\sigma$) aufweisen, wobei das Abtasten des Gewichtswerts das Abtasten des Gewichtswerts aus der Normal-Wahrscheinlichkeits-Verteilung ($q(w|\theta)$) basierend auf dem zugeordneten Mittelwert und der Standardabweichung aufweist; wobei die Schaltung ferner eingerichtet ist zum:

- Durchführen einer Rückwärts-Propagierung, um die Parameter ($\theta$), die wenigstens einigen der Synapsen zugeordnet sind, zu aktualisieren, wobei das Bayes'sche neuronale Netz so trainiert wird, dass es eingerichtet ist zum:
- Durchführen mehrerer Monte-Carlo-Inferenzen, wobei jede Monte-Carlo-Inferenz das Durchführen einer Vorwärts-Propagierung aufweist;
- Summieren der Anzahl von Feuerereignissen bzw. Spikes, die von jedem Ausgabe-Neuron des Bayes'schen neuronalen Netzes während jeder Monte-Carlo-Inferenz erzeugt werden;
- Bestimmen einer vorhergesagten Klasse basierend auf einem Ausgabe-Neuron mit der größten Anzahl von Spikes, wobei das Ausgabe-Neuron mit der größten Anzahl von Spikes die Klasse bezeichnet, zu der eine Eingabe in das Bayes'sche neuronale Netz gehört, wobei die Eingabe Eingabe-Signale aufweist, die von einem oder mehreren Sensoren erfasst werden; und
- Erzeugen eines oder mehrerer Steuer-Signale zum Steuern wenigstens eines Aktuators basierend auf der vorhergesagten Klasse.

**Revendications**

1. Procédé d'inférence utilisant un réseau neuronal bayésien, le procédé étant mis en œuvre par un circuit (200) et/ou par un circuit (200) et/ou par l'exécution d'instructions par un dispositif de traitement (402), le procédé comprenant l'exécution de multiples inférences de Monte Carlo, chaque inférence de Monte Carlo comprenant l'exécution d'une propagation directe par une synapse entre un neurone pré-synaptique (N1-N4) et un neurone post-synaptique (N1'-N4') dans le réseau neuronal bayésien, la propagation directe comprenant, pendant au moins une première instance temporelle :

   (a) la détermination de si le neurone présynaptique (N1-N4) a émis un pic ;
   (b) si le neurone présynaptique est déterminé comme ayant émis un pic, l'échantillonnage d'une valeur de poids pour la synapse à partir d'une distribution de variation (q(w|θ)) et la génération d'une somme pondérée en utilisant la valeur de poids échantillonnée ; et
   (c) si le neurone présynaptique (N1-N4) n'a pas été déterminé comme ayant émis un pic, l'assignation d'aucune valeur de poids ou d'une valeur de poids nulle à la synapse ;

   le procédé comprenant en outre :

   la somme du nombre de pics générés par chaque neurone de sortie du réseau neuronal bayésien pendant chaque inférence de Monte Carlo ;
   la détermination d'une classe prédite sur la base d'un neurone de sortie ayant le plus grand nombre de pics, dans lequel le neurone de sortie ayant le plus grand nombre de pics désigne la classe à laquelle appartient une entrée du réseau neuronal bayésien, dans lequel l'entrée comprend des signaux d'entrée capturés par un ou plusieurs capteurs ; et
   la génération d'un ou de plusieurs signaux de commande pour commander au moins un actionneur sur la base de la classe prédite.

2. Procédé selon la revendication 1, comprenant la répétition des opérations (a) à (c) pour chaque synapse du réseau neuronal bayésien (100, 1000), et la génération d'une valeur de sortie du réseau neuronal bayésien (100, 1000 sur la base des sommes pondérées.

3. Procédé selon la revendication 1 ou 2, comprenant la répétition des opérations (a) à (c), pendant au moins une deuxième instance temporelle postérieure à la première instance temporelle.

4. Procédé selon l'une quelconque des revendications 1 à 3, dans lequel chaque synapse est associée à une distribution de probabilité normale (q(w|θ)) définie par des paramètres comprenant au moins une moyenne (μ) et un écart type (σ), dans lequel l'échantillonnage de la valeur du poids comprend l'échantillonnage de la valeur du poids à partir de la distribution de probabilité normale (q(w|θ)) sur la base de la moyenne et de l'écart type associés.

5. Procédé selon l'une quelconque des revendications 1 à 4, comprenant en outre la génération d'une valeur de certitude sur la base du nombre de pics de la classe prédite et du nombre de pics d'une ou de plusieurs parmi les autres classes.

6. Procédé selon l'une quelconque des revendications 1 à 5, dans lequel les un ou plusieurs signaux de commande sont générés également sur la base de la valeur de certitude.

7. Procédé d'apprentissage d'un réseau neuronal bayésien (100, 1000), le procédé étant mis en œuvre par un circuit (200) et/ou par l'exécution d'instructions par un dispositif de traitement (402), le procédé comprenant

   - l'exécution d'une propagation directe de lots d'un ensemble de données d'apprentissage, dans lequel l'exécution de la propagation directe comprend :

   l'exécution d'une propagation directe par une synapse entre un neurone pré-synaptique (N1-N4) et un neurone post-synaptique (N1'-N4') dans le réseau neuronal bayésien, la propagation directe comprenant, pendant au moins une première instance temporelle :

      (a) la détermination de si le neurone présynaptique (N1-N4) a émis un pic ;
      (b) si le neurone présynaptique est déterminé comme ayant émis un pic, l'échantillonnage d'une valeur de poids pour la synapse à partir d'une distribution de variation (q(w|θ)) et la génération d'une somme pondérée en utilisant la valeur de poids échantillonnée ; et

(c) si le neurone présynaptique (N1-N4) n'a pas été déterminé comme ayant émis un pic, l'assignation d'aucune valeur de poids ou d'une valeur de poids nulle à la synapse ;

dans lequel chaque synapse est associée à une distribution de probabilité normale (q(w|θ)) définie par des paramètres comprenant au moins une moyenne (μ) et un écart type (σ), dans lequel l'échantillonnage de la valeur du poids comprend l'échantillonnage de la valeur du poids à partir de la distribution de probabilité normale ($q(w|\theta)$) sur la base de la moyenne et de l'écart type associés ;

dans lequel le procédé comprend en outre :

- l'exécution d'une rétropropagation afin de mettre à jour les paramètres (θ) associés à au moins certaines des synapses, dans lequel le réseau neuronal bayésien est entraîné de sorte à :
- exécuter de multiples inférences de Monte Carlo, chaque inférence de Monte Carlo comprenant l'exécution d'une propagation directe ;
- ajouter le nombre de pics générés par chaque neurone de sortie du réseau neuronal bayésien pendant chaque inférence de Monte Carlo ;
- déterminer une classe prédite sur la base d'un neurone de sortie ayant le plus grand nombre de pics, dans lequel le neurone de sortie ayant le plus grand nombre de pics désigne la classe à laquelle appartient une entrée du réseau neuronal bayésien, dans lequel l'entrée comprend des signaux d'entrée capturés par un ou plusieurs capteurs ; et
- générer un ou plusieurs signaux de commande pour commander au moins un actionneur sur la base de la classe prédite.

8. Procédé selon la revendication 7, dans lequel la rétropropagation est basée sur une fonction de coût comprenant une norme L1 du nombre total de pics générés par les neurones du réseau neuronal bayésien (100, 1000).

9. Procédé selon la revendication 7 ou 8, dans lequel chaque neurone est configuré pour mettre en œuvre une fonction d'activation neuronale basée sur une fonction en escalier de Heaviside, et dans lequel l'exécution de la rétropropagation est basée sur une dérivée partielle d'une borne inférieure de preuve (ELBO) dans laquelle la fonction d'activation du neurone est remplacée par une fonction de substitution plutôt que par la fonction en escalier de Heaviside.

10. Produit de programme d'ordinateur stockant des instructions qui provoquent la mise en œuvre du procédé selon l'une quelconque des revendications 1 à 9 lorsque les instructions sont exécutées par un dispositif de traitement.

11. Circuit d'exécution d'une inférence utilisant un réseau neuronal bayésien, l'inférence comprenant de multiples inférences de Monte Carlo, chaque inférence de Monte Carlo comprenant l'exécution d'une propagation directe par une synapse entre un neurone pré-synaptique (N1-N4) et un neurone post-synaptique (N1'-N4') dans un réseau neuronal bayésien, le circuit étant configuré pour exécuter la propagation directe pendant au moins une première instance temporelle, le circuit comprenant :

un premier circuit configuré, , pendant au moins la première instance temporelle, déterminer si le neurone présynaptique (N1-N4) a émis un pic ; et
un circuit d'échantillonnage configuré, pendant au moins la première instance temporelle :

- si le neurone présynaptique est déterminé comme ayant émis un pic (N1-N4), pour échantillonner une valeur de poids pour la synapse à partir d'une distribution de variation (q(w|θ)) et pour générer une somme pondérée en utilisant la valeur de poids échantillonnée ; et
- si le neurone présynaptique (N1-N4) n'a pas été déterminé comme ayant émis un pic, pour n'assigner aucune valeur de poids ou une valeur de poids nulle à la synapse ;

le circuit étant configuré en outre pour :

- sommer le nombre de pics générés à chaque sortie du réseau neuronal bayésien pendant chaque inférence de Monte Carlo ;
- déterminer une classe prédite sur la base d'un neurone de sortie ayant le plus grand nombre de pics, dans lequel le neurone de sortie ayant le plus grand nombre de pics désigne la classe à laquelle appartient une entrée du réseau neuronal bayésien, dans lequel l'entrée comprend des signaux d'entrée capturés par un ou plusieurs capteurs ; et
- générer un ou plusieurs signaux de commande pour commander au moins un actionneur sur la base de la classe prédite.

12. Circuit d'apprentissage d'un réseau neuronal bayésien (100, 1000), le circuit étant configuré pour :

- exécuter une propagation directe de lots d'un ensemble de données d'apprentissage, dans lequel l'exécution de la propagation directe comprend :

l'exécution d'une propagation directe par une synapse entre un neurone pré-synaptique (N1-N4) et un neurone post-synaptique (N1'-N4') dans un réseau neuronal bayésien, la propagation directe comprenant, pendant au moins une première instance temporelle :

(a) la détermination de si le neurone présynaptique (N1-N4) a émis un pic ;
(b) si le neurone présynaptique est déterminé comme ayant émis un pic, l'échantillonnage d'une valeur de poids pour la synapse à partir d'une distribution de variation ($q(w|\theta)$) et la génération d'une somme pondérée en utilisant la valeur de poids échantillonnée ; et
(c) si le neurone présynaptique (N1-N4) n'a pas été déterminé comme ayant émis un pic, l'assignation d'aucune valeur de poids ou d'une valeur de poids nulle à la synapse ;

dans lequel chaque synapse est associée à une distribution de probabilité normale ($q(w|\theta)$) définie par des paramètres comprenant au moins une moyenne ($\mu$) et un écart type ($\sigma$), dans lequel l'échantillonnage de la valeur du poids comprend l'échantillonnage de la valeur du poids à partir de la distribution de probabilité normale ($q(w|\theta)$) sur la base de la moyenne et de l'écart type associés ;
dans lequel le circuit est configuré en outre pour :

- exécuter une rétro-propagation afin de mettre à jour les paramètres ($\theta$) associés à au moins certaines des synapses, dans lequel le réseau neuronal bayésien est entraîné de sorte à :
- exécuter de multiples inférences de Monte Carlo, chaque inférence de Monte Carlo comprenant l'exécution d'une propagation directe ;
- ajouter le nombre de pics générés par chaque neurone de sortie du réseau neuronal bayésien pendant chaque inférence de Monte Carlo ;
- déterminer une classe prédite sur la base d'un neurone de sortie ayant le plus grand nombre de pics, dans lequel le neurone de sortie ayant le plus grand nombre de pics désigne la classe à laquelle appartient une entrée du réseau neuronal bayésien, dans lequel l'entrée comprend des signaux d'entrée capturés par un ou plusieurs capteurs ; et
- générer un ou plusieurs signaux de commande pour commander au moins un actionneur sur la base de la classe prédite.

## Fig. 1

## Fig. 2

# Fig. 3

300

202    204    206

# Fig. 4

400

INSTR
MEM — 404

414

I/0
INTERFACE

P — 402

MEMORY — 406

ANN

408 — WPD$_n$

DATA SET — 410

INFERENCE
PREDICTIONS — 412

## Fig. 5A

## Fig. 5B

# Fig. 6

```
           ┌──────────────────────┐
           │        i = 0         │──── 601
           └──────────┬───────────┘
                      │
        ┌─────────────┤
        │             ▼
        │  ┌──────────────────────┐
        │  │        t = 0         │──── 602
        │  └──────────┬───────────┘
        │             │
        │   ┌─────────┤
        │   │         ▼
        │   │      ╱──────────╲
        │   │     ╱    603     ╲
        │   │  N ╱  AT TIME t,  ╲ Y
        │   │ ◄─┤ FOR θ, S_pre=1? ├─►
        │   │    ╲               ╱
        │   │     ╲             ╱
        │   │      ╲───────────╱
        │   │   605    │           │
        │   │   ┌──────▼─────┐  ┌──▼──────────────┐
        │   │   │   w_k = 0  │  │  SAMPLE w       │──── 604
        │   │   └──────┬─────┘  │  FROM q(w|θ)    │
        │   │          │        └──┬──────────────┘
        │   │          └─────┬─────┘
        │   │  608           ▼
        │   │ ┌────────┐  ╱──────────╲  607
        │   │ │ t=t+1  │◄─┤   t = T ? ├
        │   └─│        │ N ╲         ╱
        │     └────────┘    ╲───────╱
        │                      │ Y
        │                      ▼
        │  ┌────────────────────────────────────────────┐
        │  │ CALCULATE WEIGHTED SUM AND UPDATE ALL S_t   │── 608
        │  └────────────────────┬───────────────────────┘
        │                       ▼
        │            ┌──────────────────────┐
        │            │      i = i + 1       │──── 609
        │            └──────────┬───────────┘
        │                       ▼
        │                  ╱──────────╲  610
        │               N ╱   i = M ?  ╲
        └────────────────┤             ├
                          ╲           ╱
                           ╲─────────╱
                              │ Y
                              ▼
                     ┌────────────┐
                     │    END     │──── 611
                     └────────────┘
```

# Fig. 7

INITIALIZE $\theta$, e = 1 —701

b = 1 , i = 0 —702

log_prior = 0
log_posterior = 0 —703

PERFORM FORWARD PROP.
WHEREIN IF ($S_{pre}$ = 1),
log_prior += log (p(w))
log_posterior += log (q(w|$\theta$)) —704

CALCULATE NLL —705

i = i + 1 —706

N ← i = M ? —707

Y

CALCULATE
ELBO = log_prior - log_posterior - NLL —708

CALCULATE dELBO/d$\theta$ WITH $\nabla_S (V_{mem})'$ —709

UPDATE PARAMETERS $\theta = \theta - \eta$(dELBO/d$\theta$) —710

712

b = b + 1 ← N — 711 — b = B ? — Y — e = E ? — N — e = e + 1
713                                        714

Y

END —715

# Fig. 8

```
┌─────────────────────────────┐
│      PERFORM M MCI           │
│   EVENT-BASED SAMPLING       │───── 801
└─────────────────────────────┘
               │
               ▼
┌─────────────────────────────┐
│  SUM SPIKES FOR EACH CLASS   │
│        OVER M MCIS           │───── 802
└─────────────────────────────┘
               │
               ▼
┌─────────────────────────────┐
│  DETERMINE PREDICTED CLASS   │───── 803
└─────────────────────────────┘
               │
               ▼
┌─────────────────────────────┐
│    DETERMINE UNCERTAINTY     │───── 804
└─────────────────────────────┘
```

# Fig. 9

# Fig. 10

## Fig. 11

## Fig. 12

# Fig. 13

# Fig. 14

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NEAL, RADFORD M.** Bayesian learning for neural networks. Springer Science & Business Media, 2012, vol. 118
- Weight uncertainty in neural network. **BLUNDELL, CHARLES et al.** International Conference on Machine Learning.. PMLR, 2015
- Spiking Generative Adversarial Networks With a Neural Network Discriminator: Local Training, Bayesian Models, and Continual Meta-Learning. **BLEE-MA ROSENFELD et al.** ARXIV.ORG. CORNELL UNIVERSITY LIBRARY, 02 November 2021
- Weight uncertainty in neural network. **BLUNDELL, CHARLES et al.** International Conference on Machine Learning. PMLR, 2015
- **G.E.P. BOX** ; **M.E. MULLER**. A note on the generation of random normal deviates. *Annals of Mathematical Statistics*, 1958, vol. 29 (2), 610-611
- *Synapse Circuit for Variational Inference*, 26 October 2021
- **NEFTCI, EMRE O.** ; **HESHAM MOSTAFA** ; **FRIE-DEMANN ZENKE**. Surrogate gradient learning in spiking neural networks: Bringing the power of gradient-based optimization to spiking neural networks.. *IEEE Signal Processing Magazine*, 2019, vol. 36 (6), 51-63
- **WERBOS, PAUL J.** Backpropagation through time: what it does and how to do it.. *Proceedings of the IEEE*, 1990, vol. 78 (10), 1550-1560
- **REBUFFI, SYLVESTRE-ALVISE et al.** icarl: Incremental classifier and representation learning.. *Proceedings of the IEEE conference on Computer Vision and Pattern Recognition*, 2017
- **PARISI, GERMAN I. et al.** Continual lifelong learning with neural networks: A review.. *Neural Networks*, 2019, vol. 113, 54-71